# EUROPEAN PATENT SPECIFICATION

(11) **EP 2 927 170 B1**
(45) Date of publication and mention of the grant of the patent: **14.12.2016**
(21) Application number: 15161430.2
(22) Date of filing: 27.03.2015
(51) Int. Cl.: B65G 57/00, B65B 35/50, B65G 57/24

(54) **Method for forming a stack of packages**
VERFAHREN ZUR BILDUNG VON PACKUNGSSTAPELN
PROCÉDÉ DE FORMATION D'UN EMPILEMENT D'EMBALLAGES

(30) Priority: 03.04.2014 SE 1450405
(43) Date of publication of application: 07.10.2015
(73) Proprietor: Modulpac AB, 341 50 Lagan (SE)
(72) Inventor: Svensson, Micael, 331 35 Värnamo (SE); Lundström, Andreas, 341 35 Ljungby (SE)
(74) Representative: Valea AB

(56) References cited:
- EP-A1- 0 888 990
- AT-B- 287 581
- US-A- 2 699 264
- US-A1- 2012 216 490

## Description

### TECHNICAL FIELD

The present application relates to the field of packaging, and more particularly to a method for forming a stack of packages in a space-saving manner when the shape of the packages do not allow piling inside each other.

### BACKGROUND OF THE INVENTION

Packaging manufacturers generally manufacture specifically designed packages or containers intended to enclose a specific consumer product at the request of the producer of said consumer product. Said package or container is designed and manufactured in great numbers at the site of the packaging manufacturer. Thereafter the packages are packed into storage or transportation cases and thereafter shipped to the producer to be filled with the consumer product.

Many packages have a design which allows them to be piled inside each other. This makes the task of packing and transporting said packages to the producer of the consumer product quite easy. A suitable number of packages are simply piled inside each other and thereafter a number of such piles are packed into the storage or transportation cases, and transported to their destination.

Many packages or containers do not allow piling inside each other, and therefore require a considerable amount of space during their transport to the producer of the consumer product or site for filling with product. Examples of this kind of package are containers with straight walls. This type of "un-stackable" packages are frequently thrown randomly into a transportation bag or case and shipped to the producer of the consumer product. However, such handling may pose problems when the packages have thin walls which may easily become deformed when many packages are tossed together and squeezed between each other. Such deformation of the walls may prevent a lid to be fitted onto the package after being filled with the consumer product and many packages may have to be discarded before even being filled.

Another problem with tossing the packages randomly into a storage or transportation case, besides being space-consuming, may be that before the step of filling consumer product into the package, each package has to be transferred from its random position inside the bag to a specific location in the filling line. This may require manual movement by a human being as the package has to be placed with its filling side in a specific direction.

To avoid the problem with deformed walls, "un-stackable" and thin-walled packages are often piled on top of each other in layers to form stacks of packages which are transferred into a storage or transportation case. Interlayers are placed in between each layer to prevent the packages from tilting. The interlayers have to be made from a material that is rigid enough to prevent the packages from tipping and falling into each other and thereby become deformed, yet thin enough to not add too much weight or height to the stack to be transported. For many types of packages, the interlayers may be re-used several times and thereby the cost for making new interlayers each time may be saved. However, for packages intended to be filled with ingestible consumer products, the interlayers may not be reused due to hygienic reasons. Either new interlayers have to be used each time or, alternatively, the interlayers have to be washed and cleaned carefully between each use. Both alternatives will add to the total cost for the package.

AT discloses a stacking method according to the preamble of claim 1 for identical blocks to be bundled and transported, such
as for example bricks, concrete blocks, shaped bricks and briquettes. In this method blocks are stacked in a number of rows superimposed one above the other with the blocks of at least one row arranged so that the junction faces between the blocks in said row do not coincide with those of the row beneath. The blocks in the subsequent rows are being displaced laterally or angularly with respect to the blocks in the preceding row. A strap is subsequently placed around the stack encircling all the blocks holding them together. Selected blocks in the lowermost row are partly displaced forming elongated recesses resulting from the absence of selected blocks in the row above. A load-distributing sheet is disposed over the latter row so that, when the strapped stack is slung, sagging of the lowermost row of the stack is substantially prevented. Said recesses are preferably formed with a size and separation suitable for receiving respective tines of a fork-lift truck. Alternatively, the blocks in said one row are inclined with respect to the blocks in the row beneath by rotation through less than 90° before strapping, so that the junction faces between blocks in said one row are not parallel to the junction faces between blocks in the row beneath. This method is not suitable for stacking thin-walled packages.

The object of the present invention is therefore to provide a method for packing such "un-stackable" and thin-walled packages into storage or transportation cases in a space-saving, cost-efficient manner without the risk of deforming the walls of the packages.

### SUMMARY OF THE INVENTION

This object is achieved by providing a method for forming a stack of thin-walled packages when all of said thin-walled packages are of the same shape and size. Each thin-walled package of the stack has a lower surface with a length (Iₓ) extending in an x-direction and a length (I_{y}) extending in a y-direction of an x-y plane. The stack comprises two or more distinct layers of thin-walled packages, wherein each layer has the same size with a horizontal extension in the x-direction and in the y-direction of an x-y plane and a vertical extension in a z-direction perpendicular to the x-y plane. The method for forming such a stack comprises the steps of:
a) arranging a layer of three or more packages in a side-by-side configuration with said lower surfaces of said packages in a plane parallel to the x-y plane,
b) arranging a subsequent layer of three or more packages on top of a previously arranged layer in a side-by-side configuration with said lower surfaces of said packages in said subsequent layer arranged in a plane parallel to the x-y plane and with said subsequent layer being offset in relation to said previous layer in the x-direction and/or in the y-direction such that the center point of the smallest rectangle that can be drawn around said subsequent layer in the x-y plane is offset a distance dₓ in the x-direction and/or a distance d_{y} in the y-direction in relation to the center point of the smallest rectangle that can be drawn around said previous layer in the x-y plane,
c) repeating step b) one or more times wherein each subsequent layer is arranged on top of a previous layer and wherein said offset distances dₓ and/or d_{y} are the same for all subsequent layers but said offset directions are shifted in each repetition of step b).

Shifting the offset direction each time a new layer is formed on top of a previously formed layer means that two neighboring layers are never offset in the same direction.

Advantageously the method disclosed herein is used when the stack comprises three, four, five, six, seven, eight, nine, ten or more layers of thin-walled packages. When used herein the term "thin-walled package" is intended to mean a package having walls with a maximum thickness of 3 mm. preferably the walls are less than 2.9, 2,8, 2.7, 2.6, 2.5, 2.4, 2.3, 2.2, 2.1, 2.0, 1.9, 1.8, 1.7, 1.6, 1.5, 1.4, 1.3, 1.2, 1.1, 1.0, 0.9, 0.8, 0.7, 0.6, 0.5, 0.4, 0.3 mm thick. Thin-walled packages may easily deform if subjected to pressure from the side. The method is especially suitable for stacking packages without integrated or attached covers or lids, i.e. packages which are open at one end, and which do not allow piling into each other, e.g. packages with straight walls such as tins, boxes and jars.

The thin-walled packages may be made from materials such as plastic, paper, cardboard, metal, and any combination of such materials.

Each stack may only consist of packages which all have the same shape and size. Thus, the same stack may not contain packages having circular lower surfaces and packages having quadratic lower surfaces, or e.g. packages with quadratic lower surfaces of different sizes.

Each package has a lower surface which has a length (lₓ) extending in the x-direction and a length (I_{y}) extending in the y-direction of the x-y plane. Normally, the packages are empty, but under certain circumstances they may be prefilled with consumer product and thereafter arranged in layers as described herein. Each individual layer in the stack is distinct and separate from the other layers in the stack, such that no parts of the packages in one layer protrude into the layers located above or below this layer.

Each layer is of the same size with a horizontal extension in the x-direction and in the y-direction of an x-y plane, and a vertical extension in a z-direction perpendicular to the x-y plane. Each layer comprises three or more packages arranged in a side-by-side configuration in said x-direction and y-direction of the x-y plane. The number of packages arranged in each direction depends on the size of the package but also on the size of any outer case used for packing, storage or transportation of said stack of packages.

However, if the stack contains packages of either a circular or a square configuration and the stack of packages is to be fitted in an outer case having a square configuration, the number of packages arranged in the x-direction will equal the number of packages arranged in the y-direction. On the other hand, if the outer case has a rectangular configuration the number of such packages arranged in one direction will not equal the number of packages arranged in the other direction.

The method for forming a stack of packages comprises in a first step a) the arrangement of a layer of three or more packages in a side-by-side configuration wherein the lower surfaces of said packages are arranged in a plane parallel to the x-y plane. Each layer in the stack comprises at least three packages, and as mentioned above, each one of the layers in one stack is of the same size, i.e. contains the same number of packages.

As used herein the term "arranging packages in a side-by-side configuration" is intended to mean that in each layer the packages are placed very close to each other in both the x-direction and the y-direction of the x-y plane, with substantially no space between the abutting walls of packages arranged next to one another. Preferably the packages are arranged in the same side-by-side pattern in all layers of the stack.

The lower surfaces of the packages in each layer are arranged parallel to the x-y plane. Advantageously all packages are arranged with their lower surfaces facing the same way in the z-direction, as this will facilitate any automatic filling of the packages with consumer product. However, if the layered arrangement of packages is not intended to be used in an automatic filling apparatus, the packages may be randomly arranged with their bottom surfaces facing either way in the z-direction. The side-by-side placement of packages in layers is still a much more space saving arrangement than any random filling in plastic bags, and results in fewer losses due to damaged packages.

Thereafter in step b) a subsequent layer of three or more packages is arranged on top of the previous layer in the same side-by-side configuration. The lower surfaces of the packages in the subsequent layer are also arranged in a plane parallel to the x-y plane. The subsequent layer is arranged in relation to the previous layer in the x-direction and/or in the y-direction such that the center point of the smallest rectangle that can be drawn around the subsequent layer in the x-y plane is offset a distance dₓ in the x-direction and/or a distance d_{y} in the y-direction in relation to the center point of the smallest rectangle that can be drawn around the previous layer in the x-y plane.

Each layer in the stack has a rectangular (or in some cases quadratic) shape which size depends on the extension of the layer in the x- and y-directions of the x-y plane, which in turn depends on the number of packages arranged in each direction, as well as the size of each package. The smallest rectangular size that can be formed in the x-y plane for each layer is when all packages in each layer are arranged in a side-by-side configuration as described above. The center point of the layer is the midpoint of the diagonal end points of the rectangle (i.e. the midpoint which is located equidistant from the diagonal endpoints in the smallest rectangle circumscribing the packages that can be formed in the x-y plane for each layer).

The subsequent layer is arranged offset in relation to the previous layer in the x-direction and/or in the y-direction such that the center point of the subsequent layer is offset a distance dₓ in the x-direction and/or a distance d_{y} in the y-direction in relation to the center point of the previous layer. This means that the entire subsequent layer is displaced in relation to the previous layer either in the x-direction, the y-direction, or in both the x- and y-directions of the x-y plane simultaneously. Consequently the lower surfaces of the packages in a subsequent layer will not be located directly above the lower surfaces of the packages in the immediately preceding layer, as the subsequent layer will always be offset in relation to the preceding layer by a predetermined distance in a predetermined direction.

Step b) may be repeated one or more times depending on the number of layers required to form a stack of a desired size. Advantageously each subsequent layer is arranged on top of a previous layer, and the displacements of each subsequent layer are directed such that the displacements for all layers in the stack are evenly distributed around the center point of the first layer. When used herein the term "a previous layer" is intended to mean the layer immediately before a subsequent layer, i.e. a subsequent layer is arranged immediately on top of a previous layer. The offset direction is never the same for two layers located on top of each other but the offset distances dₓ in the x-direction, and/or d_{y} in the y-direction are the same for all subsequent layers regardless of offset direction.

The method is suitable for stacking packages with lower surfaces of any shape. Each package has a lower surface which has a length (lₓ) extending in the x-direction and a length (l_{y}) extending in the y-direction of the x-y plane. The packages may have shapes where the lower surfaces have quadratic, rectangular, circular, pentagonal, hexagonal or octagonal outlines. Regardless of the shape, the outline of each package has a lower surface with a length (lₓ) extending in the x-direction and a length (l_{y}) extending in the y-direction of the x-y plane. Circular and quadratic packages each have lower surfaces which extend equal lengths (lₓ) and (l_{y}) in both the x- and y-directions, while e.g. rectangular packages have lower surfaces wherein the length (lₓ) in the x-direction does not equal the length (l_{y}) in the y-direction of the x-y plane.

Each stack may consist only of packages which all have the same shape and size. Thus, the same stack may not contain packages having circular lower surfaces and packages having quadratic lower surfaces, or e.g. packages with quadratic lower surfaces of different sizes.

Advantageously, in steps b) and c) each subsequent layer is arranged offset to the previous layer in the x-direction an offset distance dₓ which equals 1.5-30 %, more preferably 5-20%, most preferably 10-15% of the length lₓ, and/or in the y-direction an offset distance d_{y} which equals 1.5-30 %, more preferably 5-20%, most preferably 10-15% of the length l_{y}.

If the lower surfaces are e.g. circular or square, the lengths (lₓ) and (l_{y}) of such packages are equal. For packages having rectangular or oval lower surfaces, (lₓ) does not equal (l_{y}). The subsequent layer may also be offset in relation to a previous layer in both the x- and y-directions simultaneously, which means that the subsequent layer may be offset in any one direction in the x-y plane except essentially straight in the x- or y- directions. However, in an advantageous embodiment such as e.g. for packages having circular or quadratic lower surfaces, the offset distances dₓ and d_{y} for the subsequent layer are equal in both the x- and y-directions.

Each package has walls which extend in the z-direction from the outer perimeter of the lower surface. The stacking method is especially suitable for forming stacks of packages having straight walls extending in the z-direction from the outline of the lower surface. When the lower surface is circular, the package has a cylindrical shape, and when the lower surface has a quadratic or rectangular outline the package has a box-like shape.

The method is advantageously used when forming stacks of packages having a cylindrical shape and a circular lower surface with the length 70 mm. Advantageously with a cylindrical package with a circular lower surface having a diameter of 70 mm (i.e. lₓ equals l_{y}), the offset distance dₓ for the subsequent layer would be 1.05-21.0 mm, preferably 3.50-14.0 mm, and most preferably 7.00-10.5 mm in the x-direction of the x-y plane, and/or the offset distance d_{y} would be 1.05-21.0 mm, preferably 3.50-14.0 mm, and most preferably 7.0-10.5 mm in the y-direction of the x-y plane.

In order to protect the packages during transport, the stack of packages is normally enclosed by some type of cover, such as a wrapping and/or an outer case. Preferably the entire stack is enclosed in an outer case with stiff or semi-rigid walls which will protect the packages from dirt and dust as well as any damaging forces that may deform the packages or disrupt the layers. The outer case may be made from materials such as e.g. cardboard, plastic or wood. The stack may be formed directly inside the case, i.e. each layer is arranged separately and one by one inside the case. However, in certain situations it may be more convenient to form the stack of packages outside the case and thereafter place the stack inside the case. The stack of packages is formed by arranging the required number of layers on top of each other as described above and thereafter the entire stack is transferred to the outer case.

The outer case used for transportation and/or storage of the formed stack is advantageously adapted in size such that the stack fits snugly inside. Preferably, the inside of the outer cage is larger in the x-direction of the x-y plane only by a distance 2dₓ, and/or in the y-direction only by a distance 2d_{y} in the x-y plane. The advantage of stacking layers of packages according to the method as disclosed herein is that the stack may be formed without using expensive interlayers between the layers in the stack. Due to the tight fit of the outer case the layers of the stack may not shift far enough in relation to each other for the packages to start tilting and thereby tip over and fall into packages located in the layer directly below.

Advantageously the stack may also be enveloped by a soft covering such as a thin plastic foil that is simply wrapped around the entire stack preventing displacement of the separate layers in relation to each other, but also serves the purpose of protecting the packages from the environment. The inside of the outer case may be lined by a wrapping such as paper or plastic foil before the stack is formed inside the case, or optionally the stack may be wrapped in the protective wrapping or a plastic bag before being transferred into the case.

Advantageously the top of the stack of layers is covered by an elastically compressible overlay, such as foamed rubber, bubble wrap, corrugated cardboard, resilient webs, expanded plastic webs or the like. The overlay serves the purpose of putting a slight downward pressure on the uppermost layer when placed between the stack and the inside of a surrounding tight fitting case.

After the stack of layers has been transferred to a protective case, the overlay is placed on top of the stack and the lid of the protective case is closed. Advantageously the stack with the overlay fits snugly inside the protective case such that when a lid covering the protective case is closed it abuts the elastic overlay and together they provide a slight downward pressure prevents the layers in the stack from shifting inside the protective case during transport. Preferably the overlay covers the entire top surface of the stack. However, also an overlay covering 90%, 80%, 70%, 60% or at least 50% of the top surface of the stack will provide enough pressure to prevent shifting of the layers as long as the downward pressure by the overlay is evenly distributed across the entire top surface of the stack.

The elastically compressible overlay may also be an integrated part of the lid of the protective casing such that when the lid covering the protective case is closed a slight downward pressure is provided to the formed stack which prevents the layers in the stack from shifting inside the protective case during transport.

After having arranged a first layer of three or more packages in a side-by-side configuration with said lower surfaces of said packages in a plane parallel to the x-y plane, step b) is carried out 1+n times to produce a stack of 2+n layers with a first layer, and first to n^{th} subsequent layers. In such a stack said first to n^{th} subsequent layers are offset in relation to said first layer in first to n^{th} offset directions.

In one embodiment step b) is repeated twice (i.e. n=1) to produce a stack of three layers with a first subsequent layer, and a second subsequent layer on top of the first subsequent layer. Such a stack will contain a first layer, a first subsequent layer and a second subsequent layer wherein said first subsequent layer is offset in relation to said first layer in a first direction, and said second subsequent layer is offset in relation to said first layer in a second direction. In an advantageous embodiment of a stack containing three layers the offsets of the first and second subsequent layers in relation to the first layer form an angle of 180°between said first and second directions in the x-y plane. In a further embodiment two or more, i.e. three, four, five or more stacks of three layers (i.e. a first layer, a first subsequent layer and a second subsequent layer) may be piled on top of each other to form one large stack containing six, nine, twelve, fifteen or more layers of packages.

In another embodiment step b) is repeated three times (i.e. n=2) to produce a stack of four layers with a first layer, a first subsequent layer arranged on top of said first layer, a second subsequent layer arranged on top of said first subsequent layer and a third subsequent layer arranged on said second subsequent layer. In this stack of packages said first subsequent layer is offset in relation to said first layer in a first direction, said second subsequent layer is offset in relation to said first layer in a second direction and said third subsequent layer is offset in relation to said first layer in a third direction. In an advantageous arrangement of a stack containing four layers the offsets of the first, second and third subsequent layers in relation to the first layer form angles of 120° between said first and second direction, 120° between said second and third direction, and 120° between said third and first direction.

In a further embodiment two or more, i.e. three, four or more stacks of four layers (i.e. a stack containing one first layer, and a first, second and third subsequent layer) may be piled on top of each other to form one large stack containing eight, twelve, sixteen or more layers of packages.

In yet another embodiment step b) is repeated four times (i.e. n=3) to produce a stack of five layers with a first layer, a first subsequent layer arranged on top of said first layer, a second subsequent layer arranged on top of said first subsequent layer, a third subsequent layer arranged on top of said second subsequent layer and a fourth subsequent layer arranged on top of said third subsequent layer. In this stack the first subsequent layer is offset in relation to said first layer in a first direction, said second subsequent layer is offset in relation to said first layer in a second direction, said third subsequent layer is offset in relation to said first layer in a third direction and said fourth subsequent layer is offset in relation to said first layer in a fourth direction. In an advantageous embodiment of a stack containing five layers the offsets of the first, second, third and fourth subsequent layers in relation to the first layer form angles of 90°between said first direction and said second direction, and 90°between said second direction and said third direction, and 90°between said third direction and said fourth direction and 90°between said fourth direction and said first direction.

Alternatively, in a stack containing five layers (i.e. n=3) the offsets of the first, second, third and fourth subsequent layers in relation to the first layer may form angles of 180°between said first and second directions, and 180°between said third and fourth directions. In a stack wherein the displacements for five layers in the stack are evenly distributed around the center point of the first layer, this means that the offsets of the first, second, third and fourth subsequent layers in relation to the first layer form angles of 90°between said first and third directions, and 90°between said third and second directions, and 90°between said second and fourth directions and 90°between said fourth and first directions.

Two or more, i.e. three, or more stacks of five layers (i.e. a stack containing one first layer, and a first, second, third and fourth subsequent layers) may be piled on top of each other to form one large stack containing ten, fifteen or more layers of packages.

### BRIEF DESCRIPTION OF THE DRAWINGS

Figure 1A is a schematic view from the side of a stack of packages formed according to the method of the invention.
Figure 1B is a top view of the stack in figure 1.
Figure 2 is a perspective view of a package.
Figure 3 is a view of the center point of the smallest rectangle that can be drawn around a layer in the x-y plane.
Figure 4A is a perspective view of a stack of three layers wherein the displacement for each layer is shown.
Figure 4B is a side view of the stack in figure 4A.
Figure 5A illustrates the offset of each layer in a stack containing five layers.
Figure 5B illustrates an alternative layering offset for a stack comprising five layers.
Figure 6 illustrates the offset for the layers in a stack comprising four layers.

### DETAILED DESCRIPTION OF THE INVENTION

In the following examples the invention will be described in more detail. However, the described embodiments mentioned below are only given as examples and should not be limiting to the present invention. Other solutions, uses, objectives, and functions within the scope of the invention as claimed in the below described patent claims should be apparent for the person skilled in the art.

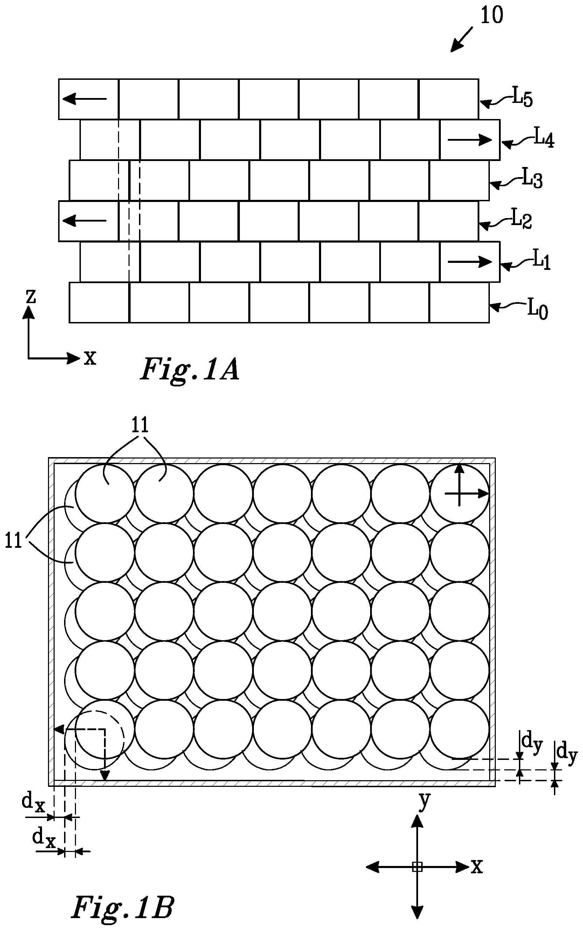

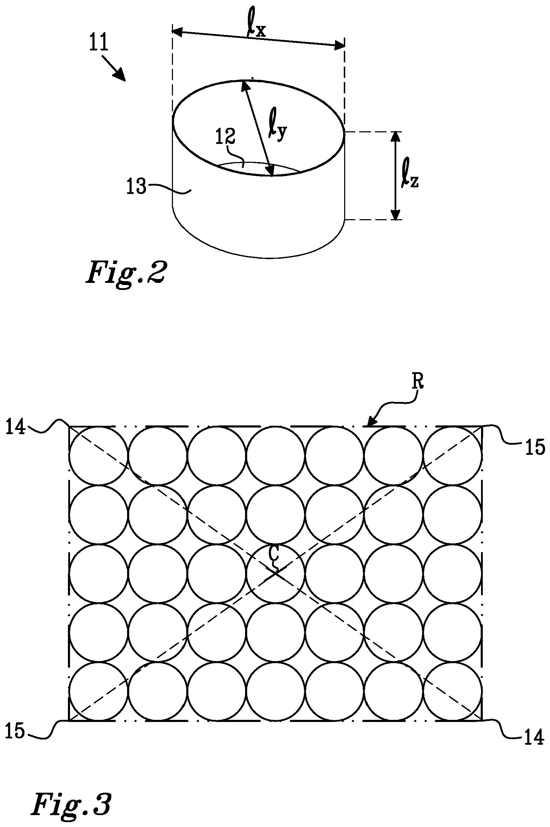

Figures 1A and 1B are schematic views of an exemplary stack 10 of packages formed according to the method of the invention. The stack 10 in figs. 1A and 1B comprises six layers (L₀-L₅), of packages wherein each layer L has an extension in the x-direction and in the y-direction of an x-y plane and in a z-direction perpendicular to the x-y plane. Each layer comprises seven packages 11 in the x-direction and five packages 11 in the y-direction of the x-y plane (fig. 1 B). Each package 11 has a lower surface 12 with a length (lₓ) extending in the x-direction and a length (l_{y}) extending in the y-direction of the x-y plane, and a wall 13 extending in the z-direction around the outer perimeter of the lower surface 12 (see figure 2). The packages 11 are arranged in a side-by-side configuration in each layer L with their lower surfaces 12 in a plane parallel to the x-y plane.

Figure 1B is a view of the top of a typical layer L in the stack. Each layer L in the stack 10 has a rectangular (or in some cases quadratic) shape. As can be seen in figure 1B the size of the layer L depends on the extension of the layer L in the x- and y-directions of the x-y plane, which in turn depends on the number of packages 11 arranged in each direction, as well as the size of each package 11. The smallest rectangle R that can be formed in the x-y plane for each layer is when all packages 11 in the layer L are arranged in a side-by-side configuration with substantially no space between each package 11 as seen in figures 1A and 1B.

The center point C of the layer L is the midpoint which is located equidistant from the diagonal end points 14, 15 of the smallest rectangle R that can be formed in the x-y plane for each layer (see Fig. 3).

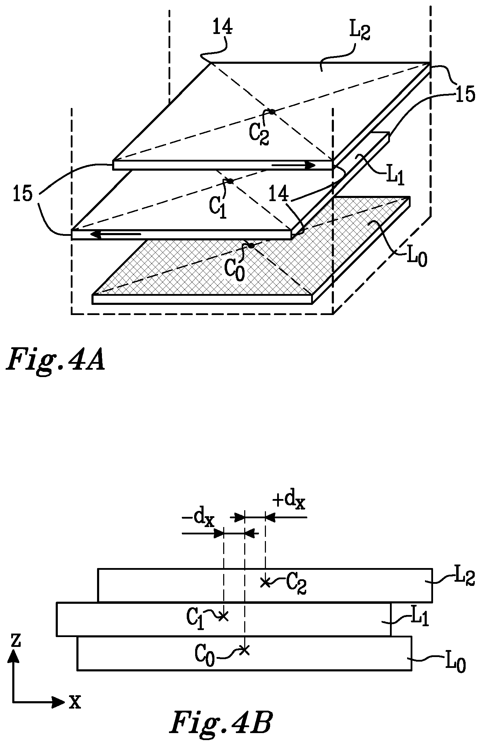

Figure 4A shows an exploded view of the placement of the layers in a stack which is formed according to the method of the invention. The stack of packages comprises three layers L₀, L₁, L₂, and in a first step the packages in the first layer L₀ are arranged in a side-by-side configuration with their lower surfaces in a plane parallel to the x-y plane.

Advantageously the packages in the subsequent layers are arranged such that the overall displacements of the subsequent layers L₁, L₂ are evenly distributed around the center point C₀ of the first layer. In a stack of three layers the most even distribution of the two subsequent layers L₁, L₂ is when the offsets of the first and second subsequent layers L₁, L₂ in relation to the first layer form an angle of 180° between said first and second subsequent directions. Therefore, the first subsequent layer L₁ is arranged such that the entire layer is displaced in a first direction which is offset in relation to said first layer L₀ in the x-direction. The offset is such that the center point C₁ of the smallest rectangle that can be drawn around said first subsequent layer L₁ in the x-y plane is offset a distance dₓ in the x-direction in relation to the center point C₀ of the smallest rectangle that can be drawn around said first layer L₀ in the x-y plane.

The second subsequent layer L₂ is arranged in a second direction which is offset in relation to said first layer L₀ in the x-direction, but opposite to that of the first direction, such that the center point C₂ of the smallest rectangle that can be drawn around said second subsequent layer L₂ in the x-y plane is offset a distance dₓ in the x-direction in relation to the center point C₀ of the smallest rectangle that can be drawn around said first layer L₀ in the x-y plane (see figures 4A and 4B).

### Example 1

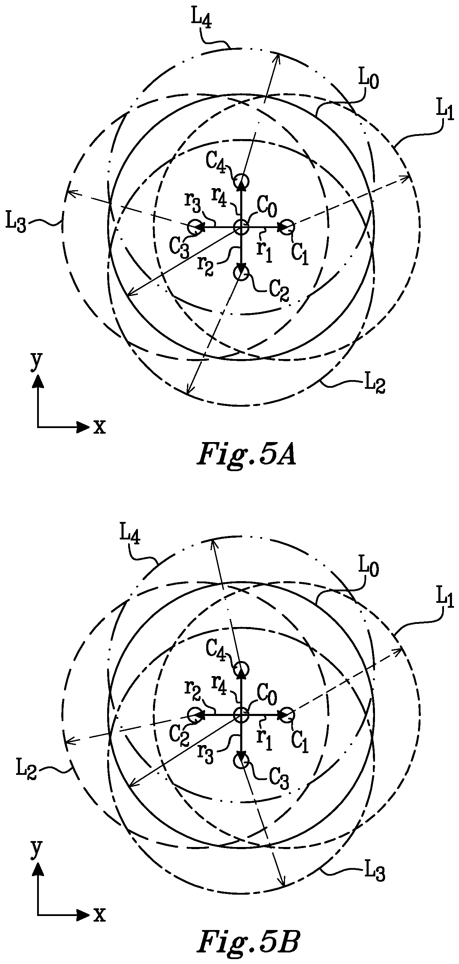

In a stack 10 of packages comprising five layers L₀, L₁, L₂, L₃, and L₄ of packages 11 with circular lower surfaces, the lower surfaces extend 100 mm in the x-direction (i.e. lₓ is 100 mm) and 100 mm in the y-direction (l_{y} = 100 mm). The offset distances dₓ and d_{y} for the displacement of each of the subsequent layers in relation to the first layer is 10% of lₓ and/or l_{y}, For simplicity the displacement is shown for only one package 11 in relation to the packages located in the layers directly below (see figure 5A). In a first step a first layer L₀ of packages is arranged in a side-by-side configuration with their lower surfaces in a plane parallel to the x-y plane. Thereafter four subsequent layers L₁, L₂, L₃, and L₄ are arranged on top of said first layer L₀ wherein each layer the packages are placed in a side-by-side configuration with their lower surfaces arranged in a plane parallel to the x-y plane. The first subsequent layer L₁ is arranged such that the entire layer is displaced in a first direction r₁ which is offset in relation to said first layer L₀ in the x-direction. The offset is such that the center point C₁ of the smallest rectangle that can be drawn around said subsequent layer L₁ in the x-y plane is offset a distance of 10 mm in the x-direction in relation to the center point C₀ of the smallest rectangle that can be drawn around said first layer L₀ in the x-y plane.

The second subsequent layer L₂ is arranged in a second direction r₂ which is offset in relation to said first layer L₀ in the y-direction such that the center point C₂ of the smallest rectangle that can be drawn around said second subsequent layer L₂ in the x-y plane is offset a distance 10 mm in the y-direction in relation to the center point C₀ of the smallest rectangle that can be drawn around said first layer L₀ in the x-y plane.

The third subsequent layer L₃ is arranged in a third direction r₃ which is offset in relation to said first layer L₀ in the x-direction such that the center point C₃ of the smallest rectangle that can be drawn around said third subsequent layer L₃ in the x-y plane is offset a distance 10 mm in the x-direction in relation to the center point C₀ of the smallest rectangle that can be drawn around said first layer L₀ in the x-y plane. The fourth subsequent layer L₄ is arranged in a fourth direction r₄ which is offset in relation to said first layer L₀ in the y-direction such that the center point C₄ of the smallest rectangle that can be drawn around said fourth subsequent layer L₄ in the x-y plane is offset a distance of 10 mm in the y-direction in relation to the center point C₀ of the smallest rectangle that can be drawn around said first layer L₀ in the x-y plane. In Figure 5A it is seen that in this embodiment the offset direction r₃ of the third subsequent layer L₃ is opposite to the offset direction r₁ of the first subsequent layer L₁, and the offset direction r₄ of the fourth subsequent layer L₄ is opposite to the offset direction r₂ of the second subsequent layer L₂.

### Example 2

In an alternative embodiment the stack also comprises five layers L₀, L₁, L₂, L₃, and L₄ of packages 11 with circular lower surfaces, wherein the lower surfaces extend 100 mm in the x-direction (i.e. lₓ is 100 mm) and 100 mm in the y-direction (l_{y} = 100 mm). The offset distances dₓ and d_{y} for the displacement of each of the subsequent layers in relation to the first layer is 10% of lₓ and/or l_{y}. In a first step, a first layer L₀ of packages is arranged in a side-by-side configuration with their lower surfaces in a plane parallel to the x-y plane (see figure 5B). Thereafter four subsequent layers L₁, L₂, L₃, and L₄ are arranged on top of said first layer L₀ wherein each layer the packages are placed in a side-by-side configuration with their lower surfaces arranged in a plane parallel to the x-y plane. The first subsequent layer L₁ is arranged such that the entire layer is displaced in a first direction r₁ which is offset in relation to said first layer L₀ in the x-direction. The offset is such that the center point C₁ of the smallest rectangle that can be drawn around said subsequent layer L₁ in the x-y plane is offset a distance of 10 mm in the x-direction in relation to the center point C₀ of the smallest rectangle that can be drawn around said first layer L₀ in the x-y plane.

The second subsequent layer L₂ is arranged in a second direction r₂ which is offset in relation to said first layer L₀ in the x-direction, but opposite to that of the first direction r₁, such that the center point C₂ of the smallest rectangle that can be drawn around said second subsequent layer L₂ in the x-y plane is offset a distance 10 mm in the x-direction in relation to the center point C₀ of the smallest rectangle that can be drawn around said first layer L₀ in the x-y plane.

The third subsequent layer L₃ is arranged in a third direction r₃ which is offset in relation to said first layer L₀ in the y-direction such that the center point C₃ of the smallest rectangle that can be drawn around said third subsequent layer L₃ in the x-y plane is offset a distance 10 mm in the y-direction in relation to the center point C₀ of the smallest rectangle that can be drawn around said first layer L₀ in the x-y plane.

The fourth subsequent layer L₄ is arranged in a fourth direction r₄ which is offset in relation to said first layer L₀ in the y-direction, but opposite to that of the third direction r₃, such that the center point C₄ of the smallest rectangle that can be drawn around said fourth subsequent layer L₄ in the x-y plane is offset a distance of 10 mm in the y-direction in relation to the center point C₀ of the smallest rectangle that can be drawn around said first layer L₀ in the x-y plane. In Figure 5B it is seen that in this embodiment that the offset direction r₁ of the first subsequent layer L₁ is opposite to the offset direction r₂ of the second subsequent layer L₂, and the offset direction r₃ of the third subsequent layer L₃ is opposite to the offset direction r₄ of the fourth subsequent layer L₄.

### Example 3

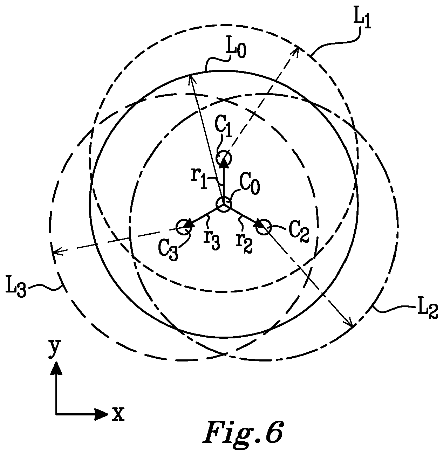

Figure 6 shows an example of the displacement of the layers in relation to each other in a stack of packages comprising four layers L₀, L₁, L₂, and L₃ of packages. The stack in this example contains packages having circular lower surfaces with a diameter of 7 cm. This means that each package has an extension in the x-direction of 70 mm, i.e. lₓ is 70mm, and an extension in the y-direction of 70 mm (i.e. l_{y} is 70 mm).

The offset distances dₓ and d_{y} for the displacement of each of the subsequent layers L₁, L₂, and L₃ in relation to the first layer L₀ is 10% of lₓ and/or l_{y}. A first layer L₀ of packages is arranged in a side-by-side configuration with their lower surfaces in a plane parallel to the x-y plane. In this example the formed stack will contain three subsequent layers L₁, L₂, and L₃ which each are displaced in relation to the first layer L₀ in a first r₁, a second r₂ and a third direction r₃.

Advantageously the displacements of the subsequent layers L₁, L₂, and L₃ are directed such that the displacements for all layers in the stack are evenly distributed around the center point C₀ of the first layer L₀. In a stack of four layers the most even distribution of the three subsequent layers is when the displacement directions of the first L₁, second L₂ and third L₃ subsequent layers in relation to the center point C₀ of the first layer L₀ form angles of 120° between said first r₁ and second direction r₂, 120° between said second r₂ and third r₃ direction, and 120° between said third r₃ and first r₁ direction (see figure 6). Therefore, in this embodiment the first subsequent layer L₁ is arranged such that the entire layer is displaced in a first direction r₁ which is offset in relation to the first layer L₀ in the x-direction such that the center point C₁ of the smallest rectangle that can be drawn around the first subsequent layer L₁ in the x-y plane is offset a distance of 7 mm in the x-direction of the x-y plane

The second subsequent layer L₂ is arranged such that the entire layer is displaced in a second direction r₂ which is offset in relation to said first layer L₀ in both the x- and y-directions such that the center point C₂ of the smallest rectangle that can be drawn around the second subsequent layer L₂ in the x-y plane is offset a distance of 7 mm from the center point C₀ of the first layer. This means that the second subsequent layer L₂ is displaced 7 mm in a second direction r₂ and that the second displacement is directed at an angle of 120° from the direction r₁ of displacement of the first subsequent layer Lᵢ.

The third subsequent layer L₃ is thereafter arranged such that the entire third layer L₃ is displaced in a third direction r₃ which is offset in relation to said first layer L₀ in both the x- and y-directions such that the center point C₃ of the smallest rectangle that can be drawn around the third subsequent layer L₃ in the x-y plane is offset a distance of 7 mm from the center point of the first layer. This means that the third subsequent layer is displaced 7 mm in a third direction r₃ and that the displacement of the third subsequent layer L₃ is directed at an angle of 120° from the direction r₂ of displacement of the second subsequent layer L₂, and also at an angle of 120° from the direction r₁ of displacement of the first subsequent layer L₁.

## Claims

1. A method for forming a stack of thin-walled packages (11), wherein all of said thin-walled packages in the stack are of the same shape and size, and each thin-walled package has a lower surface with a length (lₓ) extending in an x-direction and a length (l_{y}) extending in a y-direction of an x-y plane, said stack comprising two or more distinct layers (L) of thin-walled packages, wherein each layer is of the same size with an horizontal extension in the x-direction and in the y-direction of an x-y plane and a vertical extension in a z-direction perpendicular to the x-y plane, said method comprising the steps of:
a) arranging a layer (L) of three or more packages (11) in a side-by-side configuration with
said lower surfaces of said packages in a plane parallel to the x-y plane,
b) arranging a subsequent layer of three or more packages on top of a previously arranged layer in a side-by-side configuration with said lower surfaces of said packages in said subsequent layer arranged in a plane parallel to the x-y plane and with said subsequent layer being offset in relation to said previous layer in the x-direction and/or in the y-direction such that the center point (Cᵢ) of the smallest rectangle that can be drawn around said subsequent layer in the x-y plane is offset a distance dₓ in the x-direction and/or a distance d_{y} in the y-direction in relation to the center point (C₀) of the smallest rectangle that can be drawn around said first layer (L₀) in the x-y plane,
said method being **characterised by** the step of:
c) repeating step b) one or more times wherein each subsequent layer (Lᵢ) is arranged on top of a previous layer and wherein the offset distances dₓ in the x-direction and/or a distance d_{y} in the y-direction are the same for all subsequent layers and said offset direction are shifted in each repetition of step b).

2. The method according to claim 1, wherein step b) the subsequent layer is offset in the x-direction a distance dₓ which equals 1.5-30 %, more preferably 5-20%, most preferably 10-15% of the length lₓ, and/or in the y-direction a distance d_{y} which equals 1.5-30 %, more preferably 5-20%, most preferably 10-15% of the length l_{y}.

3. The method according to claims 1 or 2, wherein the formed stack of layers is covered by a compressible overlay having elastic properties.

4. The method according to claims 1 - 3, wherein said stack of packages is formed inside an outer case.

5. The method according to claim 4, wherein said layers are formed outside said outer case and subsequently transferred into said outer case.

6. The method according to claim 5, wherein said layers are placed in a wrapping before being transferred into said outer case.

7. The method according to claim 5, wherein said layers are transferred into an outer case containing a wrapping.

8. The method according to any one of the preceding claims wherein the packages have an uncovered opening in an upper part.

9. The method according to any one of the preceding claims wherein the packages are empty.

10. The method according to any one of the preceding claims wherein the packages are arranged in the same side-by-side packaging pattern in all layers in the stack.

11. The method according to any one of the preceding claims wherein the lower surfaces of said packages have a circular shape.

12. The method according to claim 11, wherein said circular lower surface has a diameter of 70 mm and the offset dₓ for the subsequent layer is 1.05-21.0 mm, preferably 3.50-14.0 mm, and most preferably 7.00-10.5 mm in the x-direction of the x-y plane, and/or the offset d_{y} is 1.05-21.0 mm, preferably 3.50-14.0 mm, and most preferably 7.0-10.5 mm in the y-direction of the x-y plane.

13. The method according to any one of the preceding claims wherein step b) is carried out 1+n times to produce a stack of 2+n layers with a first layer, and first to n subsequent layers.

14. The method according to claim 13, wherein said first to n subsequent layers are offset in relation to said first layer in first to n offset directions.

15. The method according to claim 14, wherein n=1 and the offsets of the first and second subsequent layers in relation to the first layer form an angle of 180°between said first direction and said second direction.

16. The method according to claim 14, wherein n=2 and the offsets of the first, second and third subsequent layers in relation to the first layer form an angle of 120°between said first direction and said second direction, an angle of 120° between said second direction and said third direction, and an angle of 120°between said third direction and said first direction.

17. The method according to claim 14, wherein n=3 and the offsets of the first, second, third and fourth subsequent layers in relation to the first layer form an angle of 90°between said first direction and said second direction, an angle of 90°between said second direction and said third direction, an angle of 90°between said third direction and said fourth direction and an angle of 90°between said fourth direction and said first direction.

18. The method according to claim 14, wherein n=3 and the offsets of the first, second, third and fourth subsequent layers in relation to the first layer form an angle of 90°between said first direction and said third direction, an angle of 90°between said third direction and said second direction, an angle of 90°between said second direction and said fourth direction and an angle of 90°between said fourth direction and said first direction.

## Patentansprüche

1. Verfahren zum Bilden eines Stapels von dünnwandigen Paketen (11),
wobei alle der dünnwandigen Pakete in dem Stapel die gleiche Form und Größe aufweisen, und wobei jedes dünnwandige Paket eine untere Oberfläche mit einer Länge (lₓ), die sich in eine x-Richtung erstreckt, und eine Länge (l_{y}), die sich in einer y-Richtung einer x-y-Ebene erstreckt aufweist, der Stapel umfassend zwei oder mehr verschiedene Schichten (L) von dünnwandigen Paketen, wobei jede Schicht die gleiche Größe hat, mit einer horizontalen Ausdehnung in der x-Richtung und in der y-Richtung einer x-y-Ebene und einer vertikalen Ausdehnung in einer z-Richtung, senkrecht zu der x-y-Ebene, das Verfahren umfassend die Schritte:
a) Anordnen einer Schicht (L) von drei oder mehr Paketen (11) in einer Seite-an-Seite Konfiguration mit den unteren Oberflächen der Pakete in einer Ebene parallel zu der x-y-Ebene,
b) Anordnen einer nachfolgenden Schicht von drei oder mehr Paketen oben auf einer zuvor angeordneten Schicht in einer Seite-an-Seite Konfiguration, mit den unteren Oberflächen der Pakete in der nachfolgenden Schicht angeordnet in einer Ebene parallel zu der x-y-Ebene und mit der nachfolgenden Schicht versetzt gegenüber der vorherigen Schicht in der x-Richtung und/oder der y-Rich-tung, sodass der Mittelpunkt (Cᵢ) des kleinsten Rechtecks, das um die nachfolgende Schicht in der x-y-Ebene gezogen werden kann, um eine Entfernung dₓ in der x-Richtung und/oder eine Entfernung d_{y} in der y-Richtung versetzt ist in Bezug auf den Mittelpunkt (C₀) des kleinsten Rechtecks, das um die erste Schicht (L₀) in der x-y-Ebene gezogen werden kann,
das Verfahren **gekennzeichnet durch** den Schritt:
c) wiederholen des Schrittes b) ein oder mehrere Male, wobei jede nachfolgende Schicht (Lᵢ) oben auf einer vorherigen Schicht angeordnet ist und wobei die Versetzungsentfernungen dₓ in der x-Richtung und/oder eine Entfernung d_{y} in der y-Richtung die gleichen sind für alle nachfolgenden Schichten und die Versetzungsrichtung in jeder Wiederholung des Schrittes b) verschoben wird.

2. Verfahren nach Anspruch 1, wobei Schritt b) die nachfolgende Schicht in der x-Richtung versetzt ist, um eine Entfernung dₓ, die 1,5-30%, bevorzugter 5-20% und am bevorzugtesten 10-15% der Länge lₓ entspricht und /oder in der y-Richtung, um eine Entfernung d_{y}, die 1,5-30%, bevorzugter 5-20% und am bevorzugtesten 10-15% der Länge l_{y} entspricht.

3. Verfahren nach den Ansprüchen 1 oder 2, wobei der gebildete Stapel von schichten mit einem komprimierbaren Überzug, der elastische Eigenschaften aufweist, bedeckt ist.

4. Verfahren nach den Ansprüchen 1-3, wobei der Stapel von Paketen in einem äußeren Gehäuse gebildet wird.

5. Verfahren nach Anspruch 4, wobei die Schichten außerhalb des äußeren Gehäuses gebildet werden und nachfolgend in das äußere Gehäuse überführt werden.

6. Verfahren nach Anspruch 5, wobei die Schichten in eine Umhüllung platziert werden, bevor sie in das äußere Gehäuse überführt werden.

7. Verfahren nach Anspruch 5, wobei die Schichten in ein äußeres Gehäuse, das eine Umhüllung enthält, überführt werden.

8. Verfahren nach einem der vorhergehenden Ansprüche, wobei die Pakete eine nicht bedeckte Öffnung in einem oberen Teil aufweisen.

9. Verfahren nach einem der vorhergehenden Ansprüche, wobei die Pakete leer sind.

10. Verfahren nach einem der vorhergehenden Ansprüche, wobei die Pakete in dem gleichen Seite-an-Seite Verpackungsmuster in dem Stapel angeordnet werden.

11. Verfahren nach einem der vorhergehenden Ansprüche, wobei die unteren Oberflächen der Pakete eine kreisförmige Form aufweisen.

12. Verfahren nach Anspruch 11, wobei die kreisförmige untere Oberfläche einen Durchmesser von 70 mm hat und die Versetzung dₓ für die nachfolgende Schicht 1,05-21,0 mm, vorzugsweise 3,50-14,0 mm und am bevorzugtesten 7,00-10,5 mm in der x-Richtung der x-y-Ebene ist und/oder die Versetzung d_{y} 1,05-21,0 mm, vorzugsweise 3,50-14,0 mm und am bevorzugtesten 7,00-10,5 mm in der y-Richtung der x-y-Ebene ist.

13. Verfahren nach einem der vorhergehenden Ansprüche, wobei der Schritt b) 1+n-mal ausgeführt wird um einen Stapel von 2+n Schichten, mit einer ersten Schicht und einer ersten bis n nachfolgenden Schichten, herzustellen.

14. Verfahren nach Anspruch 13, wobei die erste bis n nachfolgenden Schichten gegenüber der ersten Schicht in einer ersten bis n Versetzungsrichtungen versetzt sind.

15. Verfahren nach Anspruch 14, wobei n=1 und die Versetzungen der ersten und zweiten nachfolgenden Schichten in Bezug auf die erste Schicht bilden einen Winkel von 180° zwischen der ersten Richtung und der zweiten Richtung.

16. Verfahren nach Anspruch 14, wobei n=2 und die Versetzungen der ersten, zweiten und dritten nachfolgenden Schichten in Bezug auf die erste Schicht bilden einen Winkel von 120° zwischen der ersten Richtung und der zweiten Richtung, einen Winkel von 120° zwischen der zweiten Richtung und der dritten Richtung und einen Winkel von 120° zwischen der dritten Richtung und der ersten Richtung.

17. Verfahren nach Anspruch 14, wobei n=3 und die Versetzungen der ersten, zweiten, dritten und vierten nachfolgenden Schichten in Bezug auf die erste Schicht bilden einen Winkel von 90° zwischen der ersten Richtung und der zweiten Richtung, einen Winkel von 90° zwischen der zweiten Richtung und der dritten Richtung, einen Winkel von 90° zwischen der dritten Richtung und der vierten Richtung und einen Winkel von 90° zwischen der vierten Richtung und der ersten Richtung.

18. Verfahren nach Anspruch 14, wobei n=3 und die Versetzungen der ersten, zweiten, dritten und vierten nachfolgenden Schichten in Bezug auf die erste Schicht bilden einen Winkel von 90° zwischen der ersten Richtung und der dritten Richtung, einen Winkel von 90° zwischen der dritten Richtung und der zweiten Richtung, einen Winkel von 90° zwischen der zweiten Richtung und der vierten Richtung und einen Winkel von 90° zwischen der vierten Richtung und der ersten Richtung.

## Revendications

1. Procédé pour former un empilement d'emballages à parois minces (11), dans lequel la totalité des emballages à parois minces dans l'empilement ont la même forme et la même taille, et chaque emballage à parois minces a une surface inférieure avec une longueur (lₓ) s'étendant dans une direction x et une longueur (l_{y}) s'étendant dans une direction y d'un plan x-y, ledit empilement comprenant deux ou plusieurs couches distinctes (L) d'emballages à parois minces, dans lequel chaque couche est de la même taille avec une extension horizontale dans la direction x et dans la direction y d'un plan x-y et une extension verticale dans une direction z perpendiculaire au plan x-y, ledit procédé comprenant les étapes de :
a) agencement d'une couche (L) de trois emballages (11) ou plus dans une configuration côte à côte avec lesdites surfaces inférieures desdits emballages dans un plan parallèle au plan x-y,
b) agencement d'une couche suivante de trois emballages ou plus sur le dessus d'une couche précédemment agencée dans une configuration côte à côte avec lesdites surfaces inférieures desdits emballages dans ladite couche suivante agencée dans un plan parallèle au plan x-y et avec ladite couche suivante décalée par rapport à ladite couche précédente dans la direction x et/ou dans la direction y de sorte que le point de centre (Cᵢ) du rectangle le plus petit qui peut être dessiné autour de ladite couche suivante dans le plan x-y est décalé d'une distance dₓ dans la direction x et/ou d'une distance d_{y} dans la direction y par rapport au point de centre (C₀) du rectangle le plus petit qui peut être dessiné autour de ladite première couche (L₀) dans le plan x-y,
ledit procédé étant **caractérisé par** l'étape de :
c) répétition de l'étape b) une ou plusieurs fois dans lesquelles chaque couche suivante (Lᵢ) est agencée sur le dessus d'une couche précédente et dans lesquelles les distances de décalage dₓ dans la direction x et/ou une distance d_{y} dans la direction y sont les mêmes pour toutes les couches suivantes et ladite direction de décalage sont incrémentées dans chaque répétition de l'étape b).

2. Procédé selon la revendication 1, dans lequel, dans l'étape b), la couche suivante est décalée dans la direction x d'une distance dₓ qui est égale à 1,5 à 30 %, plus de préférence 5 à 20 %, le plus de préférence 10 à 15 % de la longueur lₓ, et/ou dans la direction y d'une distance d_{y} qui est égale à 1,5 à 30 %, plus de préférence 5 à 20 %, le plus de préférence 10 à 15 % de la longueur l_{y}.

3. Procédé selon les revendications 1 ou 2, dans lequel l'empilement formé de couches est couvert par un revêtement compressible ayant des propriétés élastiques.

4. Procédé selon les revendications 1 à 3, dans lequel ledit empilement d'emballages est formé à l'intérieur d'un boîtier extérieur.

5. Procédé selon la revendication 4, dans lequel lesdites couches sont formées à l'extérieur dudit boîtier extérieur et transférées par la suite dans ledit boîtier extérieur.

6. Procédé selon la revendication 5, dans lequel lesdites couches sont placées dans un enveloppement avant d'être transférées dans ledit boîtier extérieur.

7. Procédé selon la revendication 5, dans lequel lesdites couches sont transférées dans un boîtier extérieur contenant un enveloppement.

8. Procédé selon l'une quelconque des revendications précédentes, dans lequel les emballages ont une ouverture découverte dans une partie supérieure.

9. Procédé selon l'une quelconque des revendications précédentes dans lequel les emballages sont vides.

10. Procédé selon l'une quelconque des revendications précédentes, dans lequel les emballages sont agencés dans le même motif d'emballage côte à côte dans toutes les couches dans l'empilement.

11. Procédé selon l'une quelconque des revendications précédentes, dans lequel les surfaces inférieures desdits emballages ont une forme circulaire.

12. Procédé selon la revendication 11, dans lequel ladite surface inférieure circulaire a un diamètre de 70 mm et le décalage dₓ pour la couche suivante est de 1,05 à 21,0 mm, de préférence 3,50 à 14,0 mm et le plus de préférence 7,00 à 10,5 mm dans la direction x du plan x-y, et/ou le décalage d_{y} est de 1,05 à 21,0 mm, de préférence 3,50 à 14,0 mm et le plus de préférence 7,0 à 10,5 mm dans la direction y du plan x-y.

13. Procédé selon l'une quelconque des revendications précédentes, dans lequel l'étape b) est exécutée 1+n fois pour produire un empilement de 2+n couches avec une première couche, et des première à n couches suivantes.

14. Procédé selon la revendication 13, dans lequel lesdites première à n couches suivantes sont décalées par rapport à ladite première couche dans des première à n directions de décalage.

15. Procédé selon la revendication 14, dans lequel n = 1 et les décalages des première et deuxième couches suivantes par rapport à la première couche forment un angle de 180° entre ladite première direction et ladite deuxième direction.

16. Procédé selon la revendication 14, dans lequel n = 2 et les décalages des première, deuxième et troisième couches suivantes par rapport à la première couche forment un angle de 120° entre ladite première direction et ladite deuxième direction, un angle de 120° entre ladite deuxième direction et ladite troisième direction, et un angle de 120° entre ladite troisième direction et ladite première direction.

17. Procédé selon la revendication 14, dans lequel n = 3 et les décalages des première, deuxième, troisième et quatrième couches suivantes par rapport à la première couche forment un angle de 90° entre ladite première direction et ladite deuxième direction, un angle de 90° entre ladite deuxième direction et ladite troisième direction, un angle de 90° entre ladite troisième direction et ladite quatrième direction, et un angle de 90° entre ladite quatrième direction et ladite première direction.

18. Procédé selon la revendication 14, dans lequel n = 3 et les décalages des première, deuxième, troisième et quatrième couches suivantes par rapport à la première couche forment un angle de 90° entre ladite première direction et ladite troisième direction, un angle de 90° entre ladite troisième direction et ladite deuxième direction, un angle de 90° entre ladite deuxième direction et ladite quatrième direction et un angle de 90° entre ladite quatrième direction et ladite première direction.
